# EUROPEAN PATENT APPLICATION

(11) **EP 2 590 426 A2**
(43) Date of publication of application: **08.05.2013**
(21) Application number: 12007519.7
(22) Date of filing: 05.11.2012
(51) Int. Cl.: H04N 21/4623, H04N 21/438

(54) **System, apparatus and method for facilitating a change between television and/or radio channels**

(30) Priority: 07.11.2011 GB 201119156
(71) Applicant: Pace Plc, Saltaire Shipley West Yorkshire BD18 3LF (GB)
(72) Inventor: Cardon, Laurent, Saltaire Shipley, BD18 3LF (GB)
(74) Representative: Wood, Graham

(57) **Abstract**

The invention relates to apparatus, system and a method to allow the generation of radio and/or television channels and, upon the user selection to change channel, the delay in the generation of the new channel to be minimised, especially when the new channel requires access authorisation and/or data decrypting and/or descrambling to be performed The data for the new channel is obtained and placed into a memory means in sequence until access authorisation is achieved at which point the data is then retrieved in sequence from the memory rather than the live datastream.

## Description

The invention to which this application relates is a system for use in relation to the use and control of electrical and/or electronic apparatus. In particular, but not necessarily exclusively, the invention relates to the use of apparatus in the form of a broadcast data receiver apparatus and system of the type which is capable of receiving data broadcast from a remote location and processing and/or storing the same to allow the generation of television, radio and/or other services therefrom to one or more users of the apparatus at a given location.

As part of the use of the apparatus there is typically provided to the user the ability to select to view and/or listen to one of many tens or hundreds of television and/or radio channels which can be generated from the data received at the broadcast data receiver. The selection as to which channel to view at a particular time is typically made either by direct user interaction with control means provided on the broadcast data receiver or via a remote control device which is held by the user and, in response to user operation of selected buttons on the device, a change signal is generated from the remote control device to be received and processed by the broadcast data receiver. Typically, in each case, the selection is made with reference to an Electronic programme guide(EPG) which is generated on a display screen connected to the broadcast data receiver, with the EPG illustrating the different channels which are available to be selected and the programmes available at that time.

When a request is made to change from one channel to another the user commonly experiences a delay before the programme on the newly selected channel is shown on the screen. This is due to the process used when the change is selected which includes the generation in the broadcast data receiver of a signal to stop the existing channel data processing, the sending of a signal indicating the new data and hence stream of received data which is required to be processed to generate the new channel, followed by the retrieval and processing of the new data to generate the new channel on the screen and/or via speakers. While a slight delay can be tolerated by users, the delay is further increased when the change in channel is such that the change is between two encrypted or scrambled channels or is from an unencrypted to an encrypted channel. Encrypted channels are typically those for which the user is required to pay a subscription, or an additional subscription over and above the normal subscription paid. As the data is protected by encryption and hence scrambled for those users who have not paid for the channel, additional steps are required to be performed by the broadcast data receiver when the encrypted channel is selected in order to allow the encrypted channel data to be decrypted and made available for viewing as appropriate. The extra steps typically include the retrieval of an Entitlement Control Message (ECM) which indicates if the user is able to view the selected channel. The ECM is then sent to an integrated chip (typically carried in an access card provided by the service provider) and, if authorised, a Control Word is provided which then allows the data for the selected encrypted data to be decrypted and displayed.

The problem with this process is that while the authorisation steps are being performed the encrypted data is being received but is not processed as no authorisation is yet provided. This therefore means that this data is effectively lost and it is only when the authorisation stage has been performed that the received encrypted data starts to be processed and the video and/or audio for the newly selected data is shown. This process therefore takes a relatively long time which, to the user, represents a delay time in which nothing occurs on their screen and can be of such a length that the user starts to question whether in fact the change selection which they have made has been registered which, in turn, leads to frustration for the user.

The aim of the present invention is to overcome the problem of delay which occurs when a user makes a selection to view a channel for which encrypted data is required to be accessed and processed and thereby make the change between channels less perceptible to the user of the apparatus.

In a first aspect of the invention there is provided a system including a broadcast data receiver for the reception, processing and generation of digital data which is representative of a plurality of television and/or radio channels, said system including user interaction means via which a user can select to view and/or listen to one of the channels at an instant in time and to select to change the operation of the broadcast data receiver to generate a new channel in place of the previous channel wherein identifying means are provided to identify, once said channel selection has been made, the required data for the new channel and data obtaining means are provided to commence obtaining the said required data, with the said obtained required data placed into a memory means until a time at which the generation of the new channel is authorised whereupon the said obtained required data is sequentially retrieved from the memory means and processed to generate the new channel.

In one embodiment the said selected new channel is generated from data which is initially encrypted or scrambled and the authorisation process includes obtaining means to allow the decryption of the data to occur. In one embodiment the means comprise obtaining an ECM and a Control Word.

In one embodiment the when the ECM and Control Word have been obtained decryption of the data commences with the data which is first decrypted being that which was first entered into the memory means rather than encrypted data from the "live" data stream. It is found that this allows the decryption and hence processing and generation of the new channel to be achieved more quickly and reduces the delay to the user between the previous channel and the new channel being available following the user selection having been made.

Typically the data for the new channel is sequentially placed into the memory means on an ongoing basis as it is received and thereafter retrieved from the memory means in sequence for as long as that new channel is selected to be viewed and/or listened to.

In one embodiment the system operates such that it is only when the new channel which is selected by the user is one which requires access authorisation that the data for the new channel is placed into memory means. In this embodiment if a new channel which is selected by the user does not have an access authorisation requirement then the data will be retrieved for the new channel from the appropriate "live" data stream and processed to allow the new channel to be generated.

In an alternative embodiment when a new channel is selected by the user the data for the selected new channel is placed into a memory means at the start and then sequentially retrieved therefrom to allow the generation of the new channel on each occasion.

Typically the said memory means is provided in addition to a conventional memory means or alternatively a buffer memory already provided in the system is used.

In a further aspect of the invention there is provided apparatus including a broadcast data receiver for the reception, processing and generation of digital data which is representative of a plurality of television and/or radio channels, said system including user interaction means via which a user can select to view and/or listen to one of the programmes at an instant in time and to select to change the operation of the broadcast data receiver to generate a new channel in place of the previous channel and memory means in which data for a selected channel is selectively stored, the apparatus further includes means for determining whether the user is authorised to access a selected channel, and if so means are provided to request and receive an access code to allow decryption of the selected new channel and wherein upon determining that a selected new channel requires access authorisation to be obtained, the data for the new channel is placed into the memory means and upon access being authorised the data from said memory is decrypted and processed to generate the new channel.

In a yet further aspect of the invention there is provided a method of selecting a new channel to be viewed and/or listened to using data which is retrieved from a broadcast data stream via a broadcast data receiver, said new channel selection made by user interaction with the broadcast data receiver to change the same from generating a previous channel to generating the new channel, said method comprising the steps of identifying the source of the data for the new channel, obtaining the data for the new channel, directing said data into a memory means for storage, identifying whether authorisation is required to access the new channel and, if so, obtaining an entitlement control message (ECM) for the new channel, sending the ECM to an access control means, obtaining an authorisation and wherein, upon receipt of the authorisation, the decryption of the data for the new channel commences using the data from the said memory means.

In one embodiment the data for the new channel is first placed into the memory means when it is detected that the new channel is encrypted and/or scrambled and/or is a channel which requires authorisation to be received before the data can be decrypted or descrambled into a form to allow the new channel to be generated.

In one embodiment, if the data for the new channel is placed into the memory means upon the new channel being selected, the stream of data for that channel continues to be fed into the memory means for the duration of the new channel being selected to be viewed and/or listened to.

Typically the memory means acts as a means by which at least a quantity of the data for the said new channel is located therein and moves therethrough in sequence.

The invention therefore allows a reduction in the delay time between the user selecting a new channel to be viewed and/or listened to and the generation of the new channel on the display screen and/or speakers and this is particularly the case when the new channel which is selected is an encrypted or scrambled channel for which a particular access code is required to be obtained before the decryption of the data and hence generation of the new channel can be achieved.

Specific embodiments of the invention are now described with reference to the accompanying drawings; wherein
Figure 1 illustrates schematically a broadcast data system in accordance with one embodiment and with which the invention can be implemented;
Figure 2 illustrates a conventional method for retrieving and generating a new channel which requires authorisation prior to decryption of the data; and
Figure 3 illustrates an embodiment of the process and method for retrieving and generating a new channel which requires authorisation in accordance with the invention.

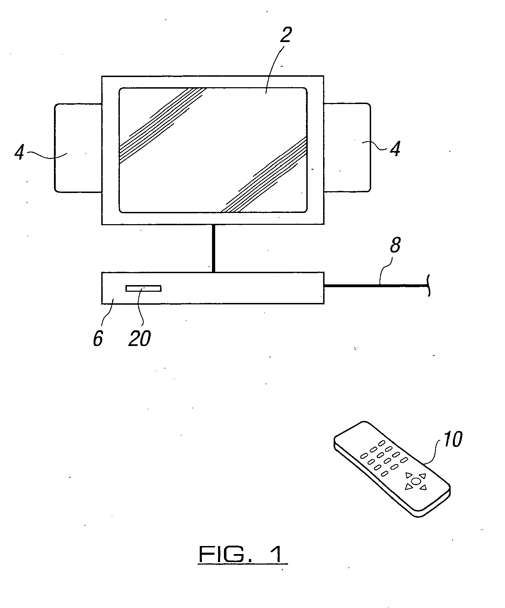

Figure 1 illustrates in a schematic manner apparatus of the type in which the current invention can be implemented. The apparatus comprises a display screen 2 and speakers 4 which in one embodiment can be provided as a television of can be provided as separate units. In this case the speakers and display screen are connected to a broadcast data receiver 6 to allow the transfer of digital data therebetween and hence allow the generation of video and/or audio which is representative of a programme on a selected channel. In another embodiment the broadcast data receiver can be provided as an integral part of the television. The broadcast data receiver is connected 8 to a source of broadcast digital data (not shown) which could, for example, be a satellite broadcast system, cable broadcast system, internet broadcast system or the like. In each case multiple streams of data are received which are representative of different channels which are available to be selected to be viewed.

The selection as to which channel to be viewed can be made by the user via direct interaction with the television, or broadcast data receiver or, more typically via remote control device 10. Over time the user will typically change the channel which they wish to view and/or listen to depending on what programmes are n the particular channels at that time. In many cases some of the channels, while the details of the same are displayed, are not automatically available to be generated and it will depend on whether the user has paid a subscription and/or the level of subscription paid. For these channels, if selected, it is necessary for the system to check if the user is entitled to select and obtain that channel and, if so obtain an access code to allow decryption of the data for the channel to commence.

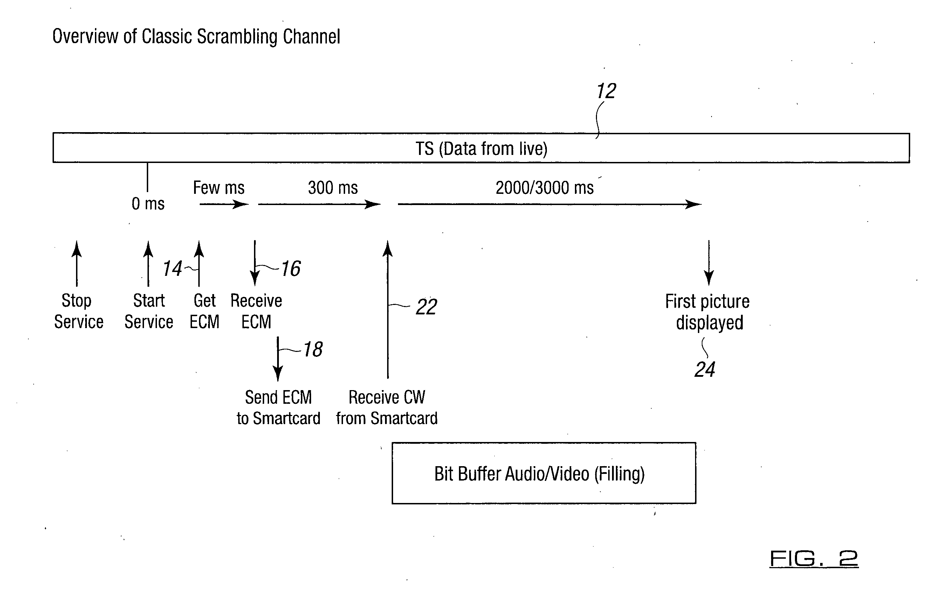

Figure 2 illustrates the conventional method by which this is performed and shows a data stream 12 of the data for the newly selected channel. Schematically, there is shown what occurs as the new channel is selected at time 0 milliseconds (ms). The first action is for the system to request the ECM 14 and then obtain the same if the user is entitled or authorised so to do. The ECM is then sent 18 to the access control, typically a smartcard 20, to allow a control word (CW) 22 to be obtained which then allows the decryption of the data stream 12 to commence by accessing the data from the live data stream at that time and lead to the generation of the first video display 24 of the new channel but this process means that a portion of the data for the new channel will have been missed during the obtaining of authorisation which takes many milliseconds to perform which, in turn, leads to a delay in the new channel being generated.

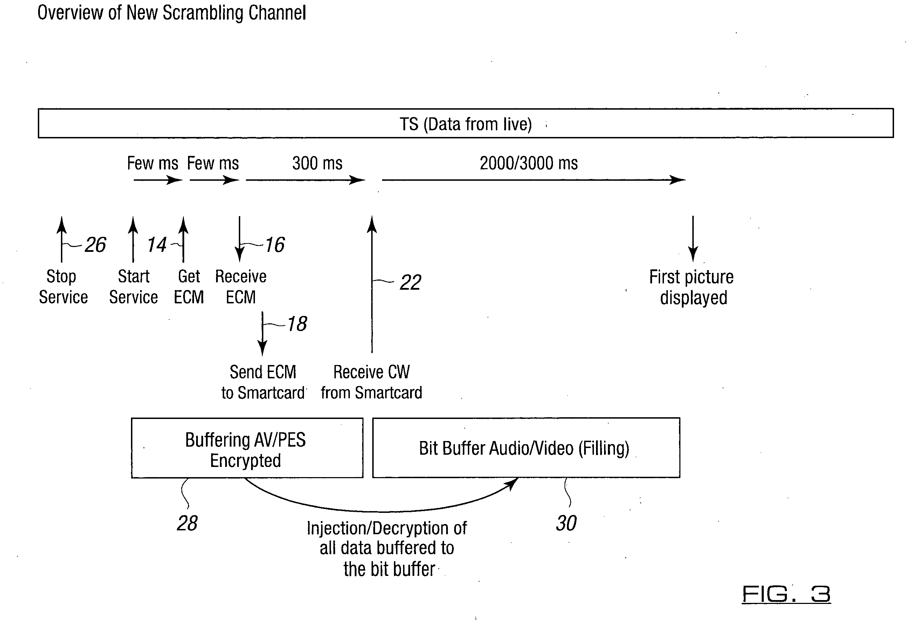

Figure 3 illustrates a system, apparatus and method in accordance with the invention. In this case the following method steps are performed. Firstly the new channel selection is received, typically from the remote control and the decoding of the data for the previous channel stops 26 and the data for the new selected channel is obtained in the encrypted form. This data in accordance with the invention is then placed into a memory means 28, typically in the form of a RAM buffer memory which may, for example, have a storage capacity of 3MB. The decoder processor is activated but at this time no data for the new channel reaches the same. At the same time the process of obtaining the ECM and Control Word is followed as in the conventional manner. However, once the Control Word has been obtained and decryption can occur, rather than referring to live data in the data stream 12 for the new channel, the data stored in the memory means 28 is accessed, typically in sequence, and passed to a demultiplexer to be decrypted and placed into a bit buffer memory 30 from which the data can then be accessed to generate the audio and video for the new channel. This system therefore allows the first video for the new channel to be generated more quickly, typically some 300ms earlier, than using the conventional system of Figure 2 as the data for the ne w channel is retrieved from the live feed for the new channel more quickly as it is retrieved and held in memory during the obtaining of the ECM and/or Control Word.

## Claims

1. A system including a broadcast data receiver for the reception, processing and generation of digital data which is representative of a plurality of television and/or radio channels, said system including user interaction means via which a user can select to view and/or listen to one of the channels at an instant in time and to select to change the operation of the broadcast data receiver to generate a new channel in place of the previous channel wherein identifying means are provided to identify, once said channel selection has been made, the required data for the new channel and data obtaining means are provided to commence obtaining the said required data, with the said obtained required data placed into a memory means until a time at which the generation of the new channel is authorised whereupon the said obtained required data is sequentially retrieved from the memory means and processed to generate the new channel.

2. A system according to claim 1 wherein the said selected new channel is generated from data which is initially encrypted or scrambled and the system includes means to allow the authorisation of the new channel by decrypting or descrambling the obtained data.

3. A system according to claim 2 wherein the means to allow authorisation obtains an ECM and a Control Word.

4. A system according to claim 2 or 3 wherein the data which is first decrypted is that which was first entered into the memory means rather than encrypted data from the "live" data stream for the selected channel.

5. A system according to claim 1 wherein the data received for the new channel is sequentially placed into the memory means on an ongoing basis as it is received by the broadcast data receiver.

6. A system according to claim 5 wherein the data is retrieved from the memory means in sequence for as long as the new channel is selected to be viewed and/or listened to.

7. A system according to claim 1 wherein the system includes means to identify whether the new channel which is selected requires access authorisation and, if so, the data for the new channel is placed into memory means.

8. A system according to claim 7 wherein if a new channel which is selected by the user does not have an access authorisation requirement then the data is retrieved for the new channel from the appropriate "live" data stream and processed to allow the new channel to be generated.

9. A system according to claim 1 wherein the said memory means is provided in addition to a buffer memory.

10. Apparatus including a broadcast data receiver for the reception, processing and generation of digital data which is representative of a plurality of television and/or radio channels, said system including user interaction means via which a user can select to view and/or listen to one of the programmes at an instant in time and to select to change the operation of the broadcast data receiver to generate a new channel in place of the previous channel and memory means in which data for a selected channel is selectively stored, the apparatus further includes means for determining whether the user is authorised to access a selected channel, and, if so, means are provided to request and receive an access code to allow decryption of the selected new channel and wherein upon determining that a selected new channel requires access authorisation to be obtained, the data for the new channel is placed into the memory means and upon access being authorised the data from said memory is decrypted and processed to generate the new channel.

11. A method of selecting a new channel to be viewed and/or listened to using data which is retrieved from a broadcast data stream via a broadcast data receiver, said new channel selection made by user interaction with the broadcast data receiver to change the same from generating a previous channel to generating the new channel, said method comprising the steps of identifying the source of the data for the new channel, obtaining the data for the new channel, directing said data into a memory means for storage, identifying whether authorisation is required to access the new channel and, if so, obtaining an entitlement control message (ECM) for the new channel, sending the ECM to an access control means, obtaining an authorisation and wherein, upon receipt of the authorisation, the decryption of the data for the new channel commences using the data from the said memory means.

12. A method according to claim 11 wherein the data for the new channel is placed into the memory means when it is detected that the data for the new channel is encrypted and/or scrambled and/or is a channel which requires authorisation to be received before the data can be decrypted or descrambled into a form to allow the new channel to be generated.

13. A method according to claim 11 wherein if the data for the new channel is placed into the memory means upon the new channel being selected, the stream of data for that channel continues to be fed into the memory means for the duration of the new channel being selected to be viewed and/or listened to.
